# EUROPEAN PATENT APPLICATION

(11) **EP 3 034 987 A1**
(43) Date of publication of application: **22.06.2016**
(21) Application number: 15200344.8
(22) Date of filing: 16.12.2015
(51) Int. Cl.: F41J 5/10, F41J 5/14

(54) **SYSTEM FOR IDENTIFYING A POSITION OF IMPACT OF A WEAPON SHOT ON A TARGET**

(30) Priority: 18.12.2014 GB 201422627
(71) Applicant: Cosmonio Ltd, Bedfordshire MK43 0BT (GB)
(72) Inventor: KATRAMADOS, Ioannis, Bedford, Bedfordshire MK43 0BT (GB); HAMILTON, Oliver, Bedford, Bedfordshire MK43 0BT (GB)
(74) Representative: D Young & Co LLP

(57) **Abstract**

An automated marking system is provided that detects and presents the on-target shots in real-time through wearable devices. Each wearable device allows the user to review AMS information and control the targets while remaining in shooting position. In addition, the automated marking system detects shots from any distance and angle even if the target is moving.

## Description

The present invention relates to the technical field of a system for identifying a position of impact of a weapon shot on a target, for example automatic marking systems that detect the exact impact location of shots fired from weapons towards a pre-determined target.

When shooters practice in a shooting range they often use a digital device that automatically marks the location of each shot on a display. Such a device, known as an Automatic Marking System (AMS), eliminates the need for manual inspection of the target and accelerates the scoring and training process. In addition, AMS users can review historical and statistical information. In certain cases, the AMS also acts as a remote control for motorised shooting targets, also known as moving targets. Users usually interact with the AMS via touch-sensitive displays, keyboard or mouse devices.

Conventional automatic marking systems (AMS) cannot be operated by shooters while remaining in their shooting position, since the AMS User interface (UI) requires physical interaction with an input device such as a touch-sensitive display, keyboard, mouse or remote control. As a result, training sessions in a shooting range are usually performed by at least two persons, one of which is known as the AMS operator and the other as the shooter. The exemplary embodiments of the present invention address these disadvantages by allowing the shooter to actively control the AMS and receive real-time feedback. In particular, an AMS is provided that detects and presents the on-target shots in real-time through wearable devices. Each wearable device allows the user to review AMS information and control the targets whilst remaining in shooting position. In addition, the AMS detects shots from any distance and angle even if the target is moving.

Further aspects, features and advantages of the present technique will be apparent from the following description of examples, which is to be read in conjunction with the accompanying drawings, in which:
Figure 1 shows a typical AMS setup in a single shooting range lane.
Figure 2 illustrates a shooter wearing AMS wearable devices.
Figure 3 shows a block diagram that describes a smart eye-protection device.
Figure 4 shows a block diagram that describes a smart wristwatch device.
Figure 5 shows a block diagram that describes a smart hearing-protection device.
Figure 6 shows the user interface on a tablet.
Figure 7 shows a block diagram that describes the AMS control unit.
Figure 8 shows a flowchart that describes the Image Processor component of the AMS control unit.
Figure 9 shows a block diagram that describes a target-control unit.
Figure 10 illustrates the AMS architecture for an entire shooting range with multiple lanes.

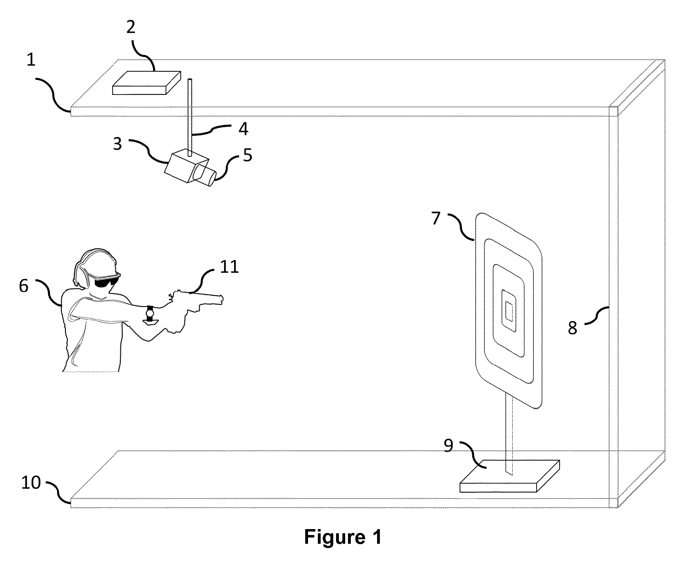

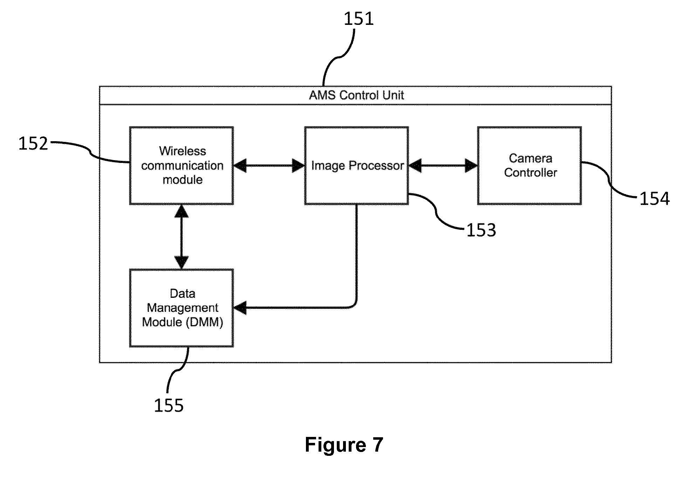

In Figure 1, a typical AMS setup is shown for a single shooting range lane. A lens **5** is attached to an imaging sensor **3**, together forming the camera system. The camera system is connected to a computer system **2**, together forming the AMS Control Unit **151** (Figure 7). The AMS Control Unit **151** (Figure 7) is mounted to the ceiling surface **1**. An extension tube **4** may be used to adjust the position of the camera so that the target is positioned within the boundaries of the captured image. Alternatively, the camera may be attached to a motorised pan-tilt system that facilitates image capture when the target is moving. The camera may be any type of imaging device, e.g. a CMOS sensor or CCD sensor, and may operate at any desired range of wavelengths, e.g. visible or infrared. A weapon **11** is used by shooter **6** to fire shots towards target **7**. The weapon can be of any type including but not limited to pistols, rifles and shotguns. Other types of weapon shot may include a bullet, paintball or other projectile fired from a gun or other shooting device, a light beam (e.g. laser beam) fired from a light gun or other light projecting device, a dart or spear thrown by the shooter, an arrow fired from a bow, or an athletics field throw (e.g. javelin or shot put), for example. A weapon with embedded electronics, also known as a smart weapon, may also be used. Target **7** may have any shape, size, material or printed pattern on its surface. The target may be attached to a moving base **9**, which facilitates shooting on moving targets. In this case, the target may move in any direction. The target may either be standing on the floor surface **10** or suspended from the ceiling surface **1**. The fired shots go through the target and are captured by bullet trap **8**. Target **7** may also be a virtual target that is displayed by a projection device, also known as projector or beamer. Said projection device may also be used to display information on at least one target.

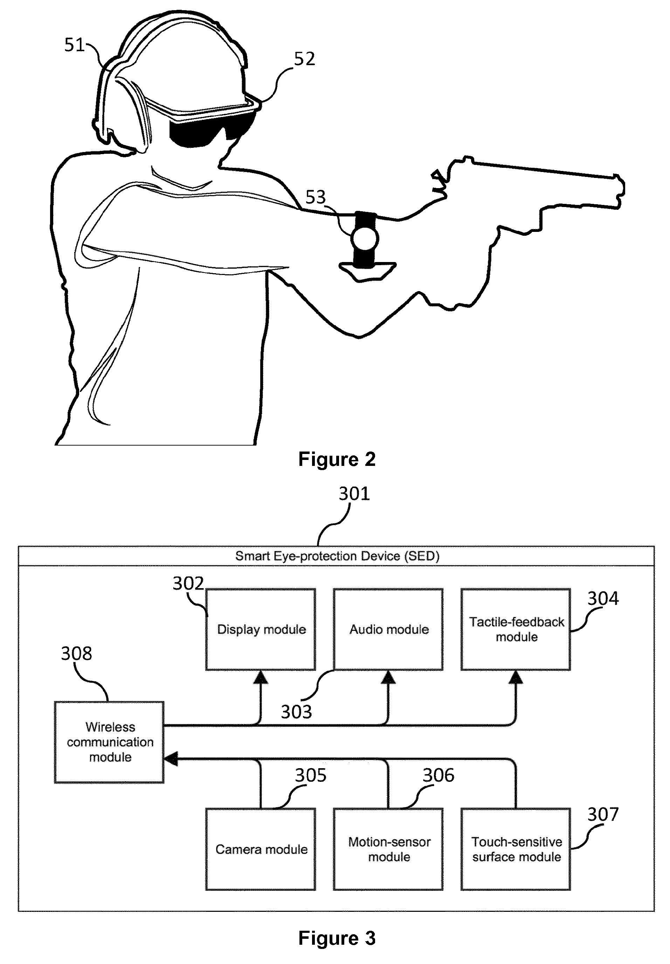

Figure 2 illustrates a shooter using different wearable devices including a Smart Eye-protection Device (SED) **52**, a Smart Wristwatch Device (SWD) **53** and a Smart Hearing-protection Device (SHD) **51**. Other examples of wearable devices may include head-worn devices such as a helmet, visor or glasses, other wrist-worn devices such as a device embedded in a sleeve, or body-worn devices such as a device mounted on a belt worn by the shooter or embedded in clothing of the shooter. While in the example of Figure 2 the wearable device is separate from the computer system 2 of Figure 1, in other examples the processing performed by the computer system 2 could be carried out by a processing unit within the wearable device itself.

The Smart Eye-protection Device (SED) **52** from Figure 2 is described in detail in Figure 3. It comprises an integrated display **302** (also known as head-mounted display), an audio module **303**, a tactile-feedback module **304**, a forward-facing camera module **305**, a motion-sensor module **306** and a touch-sensitive surface module **307**. Each one of these modules is linked to a wireless-communication module **308**, which exchanges information with AMS Control Unit **151** (Figure 7). Each time a shot is detected, the AMS Control Unit **151** (Figure 7) broadcasts information that includes: a) the lane number in which a shot was detected, b) together with an image of the target, c) the coordinates of the detected shot relative to the top-left corner of the image, d) a sound signal. Alternatively, rather than broadcasting the image or the sound signal, the image or sound may be stored locally at the wearable device, and if selecting from several images or sound files, the AMS control unit 151 could broadcast an identifier of the particular image or sound to be used. The broadcast information is received and processed by the wireless-communication module **308**. The display module **302** displays the target image and visually marks the detected shot by drawing a circle or other suitable shape. If the display resolution is low, then the display module **302** may only display a part of the image so that the location of the detected shot is clearly visible. If the wireless-communication module **308** receives a sound signal then this is delivered to the user in acoustic form through the audio module **303**. Such sound signals may include notifications about each detected shot or statistical information about the current or previous training sessions. In any case, the AMS Control Unit **151** (Figure 7) decides the content of the sound signal. The audio module **303** can also record voice-commands from the user and transmit them to the AMS Control Unit **151** (Figure 7) via the wireless-communication module **308**. The tactile-feedback module **304** notifies the user haptically when a new shot is detected. The camera module **305** captures images that show the actions of the user during a training session. These images are transmitted to the AMS Control Unit **151** (Figure 7) via the wireless-communication module **308** and may later be used by the trainer and the trainee for evaluation purposes. The captured camera images may also include user's hand gestures, which the AMS Control Unit **151** (Figure 7) can detect and translate into user commands for controlling the AMS. The motion-sensor module **306** records the user head's motion by means of acceleration and orientation. The recorded motion signals are transmitted to the AMS Control Unit **151** (Figure 7) via the wireless-communication module **308** and may later be used by the trainer and the trainee for evaluation purposes. The AMS Control Unit **151** (Figure 7) may also translate certain motion patterns as user commands for controlling the AMS. For example, moving the head upwards could be translated as a "Change to Multilane Mode" command, where the user shoots on multiple targets in a single session. The SED **52** may also have a touch-sensitive surface **307**, that the user can use to select the lane of the shooting range for which information is required.

In the above example, the position of impact of the weapon shot is identified by coordinates relative to the top-left corner of the image. However, it will be appreciated that any coordinate system could also be used to identify the position. Also, in some cases the impact position of the weapon shot need not be identified exactly. For example, if the AMS system is used for automated scoring then it may be enough to identify the region of the target that was hit by the shot without marking the exact impact position.

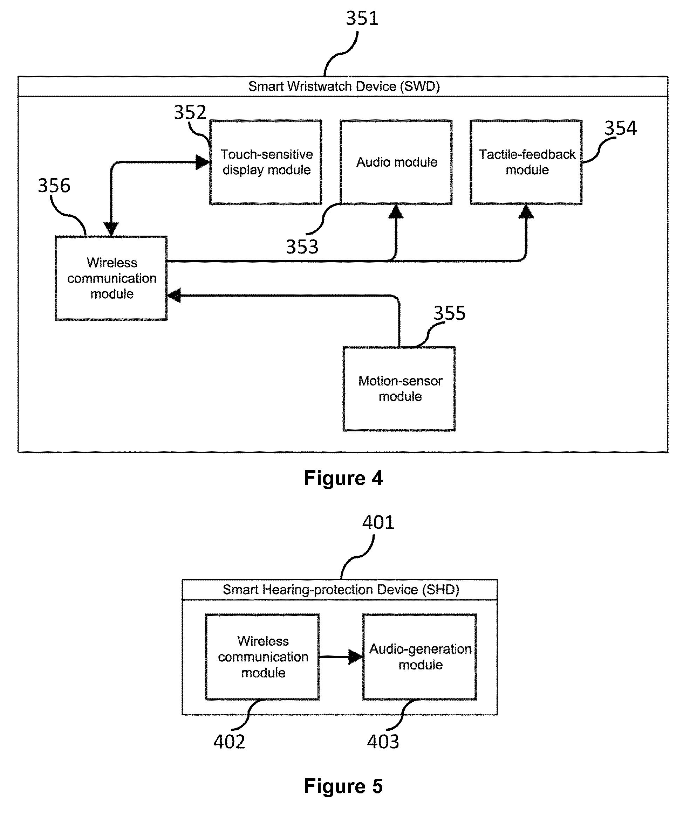

The SWD **53** from Figure 2 is described in detail in Figure 4. It comprises a touch-sensitive display module **352**, an audio module **353**, a tactile-feedback module **354** and a motion-sensor module **355**. Each one of these modules is linked to a wireless-communication module **356**, which exchanges information with AMS Control Unit **151** (Figure 7). The display module **352** displays the target image and visually marks the detected shot by drawing a circle or other suitable shape. If the display resolution is low, then the display module **352** may only display a part of the image so that the location of the detected shot is clearly visible. If the wireless-communication module **356** receives a sound signal then this is delivered to the user in acoustic form through the audio module **353**. Such sound signals may include notifications about each detected shot or statistical information about the current or previous training sessions. The audio module **353** can also record voice-commands from the user and transmit them to the AMS Control Unit **151** (Figure 7) via the wireless-communication module **356**. The tactile-feedback module **354** notifies the user haptically when a new shot is detected. The motion-sensor module **355** records the user's wrist motion by means of acceleration and orientation. The recorded motion signals are transmitted to the AMS Control Unit **151** (Figure 7) via the wireless-communication module **356** and may later be used by the trainer and the trainee for evaluation purposes. The AMS Control Unit **151** (Figure 7) may also translate certain motion patterns as user commands for controlling the AMS. For example, a twist of the wrist could be translated as a "Start New Session" command.

The Smart Hearing-protection Device (SHD) **51** from Figure 2 is described in detail in Figure 5. The SHD comprises a wireless-communication module **402** and an audio module **403**. If the wireless-communication module **402** receives a sound signal then this is delivered to the user in acoustic form through the audio module **403**. Such sound signals may include notifications about each detected shot or statistical information about the current or previous training sessions. The audio module **403** can also record voice-commands from the user and transmit them to the AMS Control Unit **151** (Figure 7) via the wireless-communication module **402**.

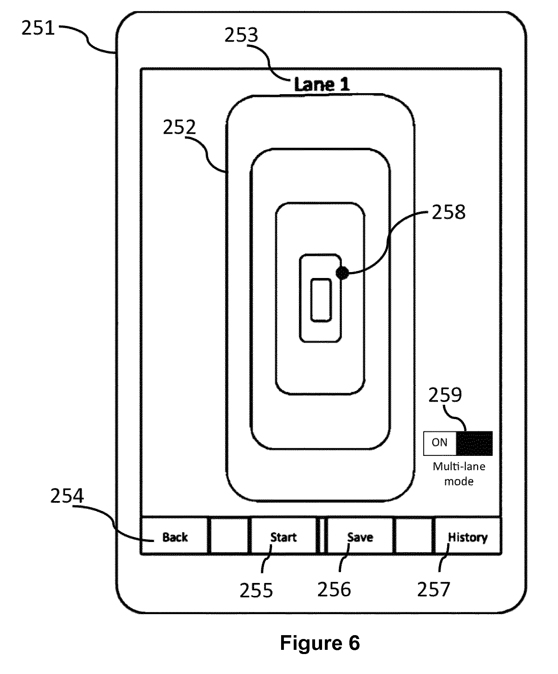

Figure 6 illustrates an AMS-compatible tablet computer **251**. The device operates in exactly the same manner as the SED device **301** from Figure 3. Such devices can be used by the trainer to access more detailed information on a higher resolution monitor. In this case, the User interface (UI) comprises a Lane Identifier **253**, an image of the target **252**, a marker **258** for each detected shot, a virtual toggle switch **259** that enables or disables the multi-lane mode and virtual buttons **254**, **255**, **256** and **257** that transmit commands to the AMS Control Unit **151** (Figure 7) when pressed.

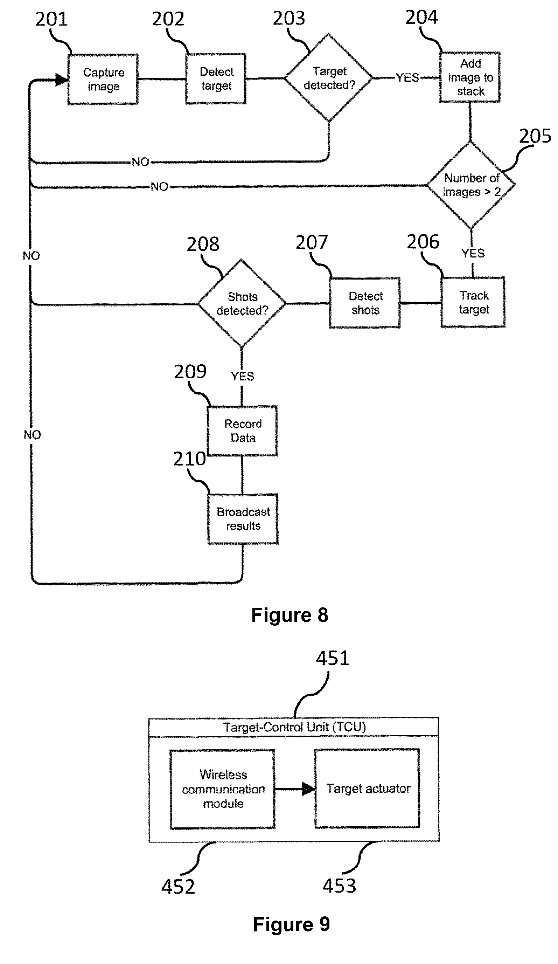

Figure 7 describes the AMS Control Unit **151**, which comprises a Wireless Communication Module **152**, an Image Processor **153**, a Camera Controller **154** and a Data Management Module (DMM) **155**. The Camera Controller **154**, controls the camera, which captures images of the target. The captured images are then analysed by the Image Processor **153**. The Camera Controller **154** may also control a motorised pan-tilt unit in order to move the camera in the direction of a moving target. Another function of the Camera Controller **154** is automatic adjustment of the camera parameters (such as exposure, contrast and brightness levels) so that the captured target images are suitable for analysis by the Image Processor **153**. The Image Processor **153** is responsible for detecting on-target shots by analysing the camera images, for storing AMS information to the DMM **155** and for transmitting the detection results to AMS-compatible devices via the wireless communication module **152**. The image processor **153** is described in more detail in Figure 8. DMM **155** stores current and historical information about each training session. Apart from images the DMM also stores sensor information from different AMS wearable devices. Upon request from the wireless communication module **152**, stored information can be retrieved from the DMM and transmitted to any AMS-compatible device. The wireless communication module **152** is also responsible for handling the communication between the AMS Control Unit, the AMS-compatible devices and the Target Control Unit **451** (Figure 9).

Figure 8 describes the operation of the Image Processor **153** from Figure 7. Firstly, an image is captured using function **201**. Function **202** analyses the captured image and checks if the target is visible using background subtraction and shape analysis software methods, which are implemented in step **203**. Unique target features, such as corners, are also detected since they facilitate tracking of moving targets in step **206**. If a target is not detected in the camera image in step **203** then the system reverts to step **201**. If a target is detected in the camera image in step **203**, the image is cropped around the target boundaries. The cropped image is then transformed to eliminate any perspective effect and is then added to an image stack in step **204**. For example, the transformation may include resizing part of the image corresponding to the target, stretching or changing an aspect ratio of the part of the image corresponding to the target, cropping parts of the image which do not contain the target, and/or changing brightness or contrast of part of the image corresponding to the target, in order to convert the image of the target into a common representation to allow subsequent comparison of the images. All the images in the image stack are fully aligned and suitable for pixel-to-pixel comparison. If required, a noise reduction technique may be used to filter image noise before adding the image to the stack in step **204**. In step **205** the size of the image stack is checked. At least two images are required for a shot to be detected. If this condition is not met then the system reverts to step **201**. If the image stack contains more than two images then the system starts tracking the target in step **206**, assuming the camera is mounted on a motorised pan-tilt unit. In this case, the pan-tilt unit moves the camera by an amount, which is equivalent to the motion of the boundaries between two successive camera images. If a motorised pan-tilt unit is not used then step **206** can be skipped. The software method **207** uses multiple images from the stack to detect consistent changes. Since the images on the stack are already aligned any changes should be caused by the impact of a shot on the target. The coordinates of each detected shot are recorded in step **209** and the results are broadcasted to AMS-compatible units in step **210**.

Hence, this technique allows the impact position of the shot to be detected solely based on the comparison of the captured images. The position sensing does not rely on providing a microphone or other sensor for detecting the moment in time at which the shot is fired (although such sensing may still be provided if desired). The shot position sensing also does not rely on a detection of the angle at which the weapon is pointing at the moment of firing, which would typically require specialist sensors to be installed on the weapon itself. By using a purely image-based technique to determine the shot location on the target, conventional weapons can be used.

Figure 9 describes a Target-Control Unit (TCU). The TCU **451** comprises a wireless-communication module **452** and a target actuator **453**. If the wireless-communication module **452** receives a command from the AMS Control Unit then the target actuator moves the target in the specified direction. Using the TCU shooters can practice their skills on moving targets.

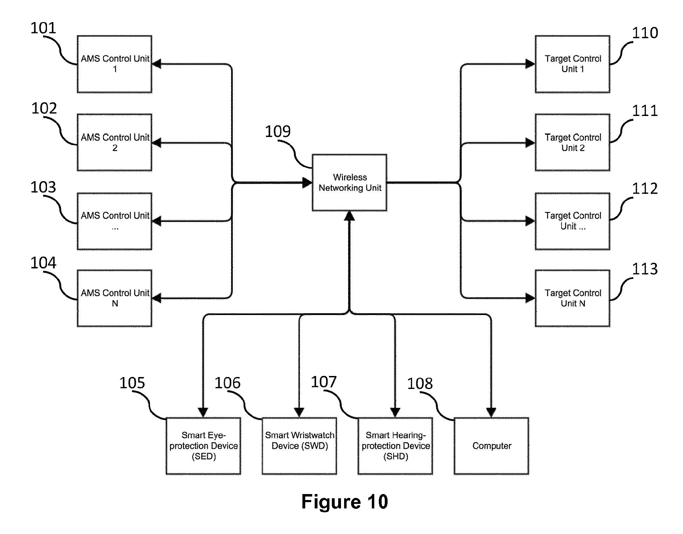

Figure 10 describes the AMS architecture in a shooting range with multiple lanes. In this case, each lane has a separate AMS Control Unit **101**, **102**, **103**, **104**. All the AMS Control Units are connected to a Wireless Networking Unit **109**. Each AMS Control Unit communicates with a corresponding TCU **110**, **111**, **112**, **113** in order to enable training on moving targets. Each wearable device **105**, **106**, **107** can communicate wirelessly with any AMS Control Unit. The user specifies which shooting lane each wearable device should connect to.

Figure 10 shows an example where each lane has a separate AMS control unit. In other examples, it is possible to provide a central AMS control unit which receives the images captured from each lane, and detects the shot location in each lane.

Further example arrangements are set out in the following clauses:
(1) A system for identifying a position of impact of a weapon shot on a target, the system comprising:
   a processing unit configured to receive images of the target captured by at least one imaging device, and to process the received images to detect the position of impact of the weapon shot relative to the target; and
   at least one wearable device configured to be worn by at least one shooter, which comprises an output unit configured to provide at least one feedback indication representing said position of impact of the weapon shot determined by the processing unit.
(2) The system according to clause (1), wherein the processing unit is configured to compare successive images of the target received from the at least one imaging device and to detect the position of impact of the weapon shot based on differences between said successive images.
(3) The system according to any of clauses (1) and (2), wherein the processing unit is configured to detect the position of impact of the weapon shot on a moving target.
(4) The system according to any preceding clause, wherein the processing unit is configured to detect the target in a plurality of images captured by the at least one imaging device.
(5) The system according to any preceding clause, wherein the processing unit is configured to generate, based on the images captured by the at least one imaging device, a plurality of aligned images in which the target is represented in a common representation, and to detect said position of impact of the weapon shot based on differences between the aligned images.
(6) The system according to clause (5), wherein the processing unit is configured to generate the aligned images by applying at least one transformation to corresponding images captured by the at least one imaging device to convert a representation of the target in said corresponding images into said common representation.
(7) The system according to clause (6), wherein said at least one transformation comprises at least one of: resizing a part of the image corresponding to the target; stretching or changing an aspect ratio of a part of the image corresponding to the target; cropping at least some parts of the image which do not contain the target; and adjusting brightness or contrast of a part of the image corresponding to the target.
(8) The system according to any preceding clause, wherein said at least one wearable device comprises at least one of: a head-worn device; a wrist-worn device; and a body-worn device.
(9) The system according to any preceding clause, wherein said at least one feedback indication comprises at least one of: a visual indication; an audible indication; and a tactile or vibrating indication.
(10) The system according to any preceding clause, wherein said at least one feedback indication comprises an image of at least part of the target and an indicator of the position on the target at which the weapon shot was detected.
(11) The system according to any preceding clause, wherein said at least one wearable device comprises a motion detector configured to detect motion of the at least one shooter while performing the weapon shot.
(12) The system according to clause (11), wherein the at least one feedback indication provided by the output unit includes information determined by at least one of the processing unit and the at least one wearable device based on the motion of the at least one shooter detected by the motion detector.
(13) The system according to any preceding clause, wherein said at least one wearable device comprises a control unit configured to control, based on a control input provided by the at least one shooter, at least one of: the processing unit; the at least one imaging device; the target; and the at least one feedback indication provided by the output unit.
(14) The system according to clause (13), wherein the at least one wearable device comprises at least one microphone configured to detect, as said control input, a spoken instruction provided by the at least one shooter.
(15) The system according to any of clauses (13) and (14), wherein the at least one wearable device comprises a gesture sensor configured to detect, as said control input, a gesture made by the at least one shooter.
(16) The system according to any preceding clause, comprising a plurality of wearable devices, wherein each wearable device comprises an output unit configured to provide at least one feedback indication representing the position of impact of the weapon shot determined by the processing unit.
(17) The system according to any preceding clause, further comprising at least one non-wearable device comprising an output unit configured to provide at least one feedback indication representing the position of impact of the weapon shot determined by the processing unit.
(18) The system according to any preceding clause, wherein:
   the processing unit, or a plurality of such processing units, is configured to receive images of targets in a plurality of lanes of shooting, and to detect, for each lane, said position of impact of the weapon shot relative to the target based on the received images of the target for that lane.
(19) The system according to clause (18), wherein said at least one wearable device is configured to select at least one lane of the plurality of lanes in response to a user input; and
   the output unit is configured to provide said at least one feedback indication representing said position of impact of the weapon shot determined for the selected at least one lane.
(20) The system according to any of clauses (18) and (19), wherein said at least one wearable device has:
   a single lane mode in which the output unit is configured to provide said at least one feedback indication representing said position of impact of the weapon shot detected for one of the plurality of lanes; and
   a multi-lane mode in which the output unit is configured to provide said at least one feedback indication representing said position of impact of the weapon shot detected for two or more of the plurality of lanes.
(21) The system according to any preceding clause, comprising said at least one imaging device.
(22) The system according to clause (21), wherein said at least one imaging device comprises at least one mechanism for changing a field of view of the images captured by the at least one imaging device.
(23) The system according to any preceding clause, wherein the processing unit comprises a transmitter configured to transmit information to the at least one wearable device identifying said position of impact of the weapon shot; and
   the at least one wearable device comprises a receiver configured to receive said information transmitted by the transmitter.
(24) The system according to any preceding clause, wherein the weapon shot comprises at least one of: a bullet, paintball or other projectile; a light beam; a dart; an arrow; a spear; and an athletics field throw.
(25) A shooting range comprising the system according to any preceding clause.
(26) A wearable device, comprising:
   a receiver configured to receive from a processing unit information indicating a position of impact of a weapon shot relative to a target; and
   an output unit configured to provide at least one feedback indication representing said position of impact of the weapon shot indicated by the information received from the processing unit.
(27) A method for a wearable device to be worn by a shooter during a weapon shot, comprising:
   receiving from a processing unit information indicating a position of impact of the weapon shot relative to a target; and
   outputting, using the wearable device, at least one feedback indication representing said position of impact of the weapon shot indicated by the information received from the processing unit.
(28) A computer program which, when executed by processing circuitry in a wearable device, controls the wearable device to perform the method of clause (27).
(29) A processing device comprising:
   a receiver configured to receive from at least one imaging device images of a target for a weapon shot; and
   processing circuitry configured to transform the received images to generate aligned images in which the target is represented in a common representation, and to compare the aligned images to detect a position of impact of the weapon shot relative to the target.
(30) A method for identifying a position of impact of a weapon shot on a target, comprising:
   receiving images of the target from at least one imaging device;
   transforming the received images to generate aligned images in which the target is represented in a common representation; and
   comparing the aligned images to detect the position of impact of the weapon shot relative to the target.
(31) A computer program which, when executed by a processing device, controls the processing unit to perform the method of clause (30).
(32) A recording medium storing the computer program of any of clauses (28) and (31).

Although illustrative embodiments of the invention have been described in detail herein with reference to the accompanying drawings, it is to be understood that the invention is not limited to those precise embodiments, and that various changes and modifications can be effected therein by one skilled in the art without departing from the scope and spirit of the invention as defined by the appended claims.

## Claims

1. A system for identifying a position of impact of a weapon shot on a target, the system comprising:
a processing unit configured to receive images of the target captured by at least one imaging device, and to process the received images to detect the position of impact of the weapon shot relative to the target; and
at least one wearable device configured to be worn by at least one shooter, which comprises an output unit configured to provide at least one feedback indication representing said position of impact of the weapon shot determined by the processing unit.

2. The system according to claim 1, wherein the processing unit is configured to compare successive images of the target received from the at least one imaging device and to detect the position of impact of the weapon shot based on differences between said successive images.

3. The system according to any of claims 1 and 2, wherein the processing unit is configured to detect the target in a plurality of images captured by the at least one imaging device.

4. The system according to any preceding claim, wherein the processing unit is configured to generate, based on the images captured by the at least one imaging device, a plurality of aligned images in which the target is represented in a common representation, and to detect said position of impact of the weapon shot based on differences between the aligned images.

5. The system according to claim 4, wherein the processing unit is configured to generate the aligned images by applying at least one transformation to corresponding images captured by the at least one imaging device to convert a representation of the target in said corresponding images into said common representation.

6. The system according to claim 5, wherein said at least one transformation comprises at least one of:
resizing a part of the image corresponding to the target;
stretching or changing an aspect ratio of a part of the image corresponding to the target;
cropping at least some parts of the image which do not contain the target; and
adjusting brightness or contrast of a part of the image corresponding to the target.

7. The system according to any preceding claim, wherein said at least one feedback indication comprises an image of at least part of the target and an indicator of the position on the target at which the weapon shot was detected.

8. The system according to any preceding claim, wherein said at least one wearable device comprises a motion detector configured to detect motion of the at least one shooter while performing the weapon shot.

9. The system according to claim 8, wherein the at least one feedback indication provided by the output unit includes information determined by at least one of the processing unit and the at least one wearable device based on the motion of the at least one shooter detected by the motion detector.

10. The system according to any preceding claim, wherein said at least one wearable device comprises a control unit configured to control, based on a control input provided by the at least one shooter, at least one of:
the processing unit;
the at least one imaging device;
the target; and
the at least one feedback indication provided by the output unit.

11. The system according to any preceding claim, wherein:
the processing unit, or a plurality of such processing units, is configured to receive images of targets in a plurality of lanes of shooting, and to detect, for each lane, said position of impact of the weapon shot relative to the target based on the received images of the target for that lane.

12. The system according to claim 11, wherein said at least one wearable device is configured to select at least one lane of the plurality of lanes in response to a user input; and
the output unit is configured to provide said at least one feedback indication representing said position of impact of the weapon shot determined for the selected at least one lane.

13. The system according to any of claims 11 and 12, wherein said at least one wearable device has:
a single lane mode in which the output unit is configured to provide said at least one feedback indication representing said position of impact of the weapon shot detected for one of the plurality of lanes; and
a multi-lane mode in which the output unit is configured to provide said at least one feedback indication representing said position of impact of the weapon shot detected for two or more of the plurality of lanes.

14. A storage medium storing a computer program which, when executed by processing circuitry in a wearable device, controls the wearable device to perform a method comprising:
receiving from a processing unit information indicating a position of impact of the weapon shot relative to a target; and
outputting, using the wearable device, at least one feedback indication representing said position of impact of the weapon shot indicated by the information received from the processing unit.

15. A storage medium storing a computer program which, when executed by a processing device, controls the processing device to perform a method for identifying a position of impact of a weapon shot on a target, the method comprising:
receiving images of the target from at least one imaging device;
transforming the received images to generate aligned images in which the target is represented in a common representation; and
comparing the aligned images to detect the position of impact of the weapon shot relative to the target.
